# EUROPÄISCHE PATENTSCHRIFT

(11) **EP 2 323 491 B1**
(45) Veröffentlichungstag und Bekanntmachung des Hinweises auf die Patenterteilung: **26.06.2013**
(21) Anmeldenummer: 10768178.5
(22) Anmeldetag: 28.09.2010
(51) Int. Cl.: A22C 11/02

(54) **VORRICHTUNG ZUM BEFÜLLEN SCHLAUCH- ODER BEUTELFÖRMIGER VERPACKUNGEN**
DEVICE FOR FILLING TUBULAR OR BAG-LIKE CONTAINERS
DISPOSITIF POUR REMPLIR DES EMBALLAGES EN FORME DE TUBE OU DE POCHE

(30) Priorität: 29.09.2009 DE 202009013062 U
(43) Veröffentlichungstag der Anmeldung: 25.05.2011
(73) Patentinhaber: Tipper Tie technopack GmbH, 21509 Glinde (DE)
(72) Erfinder: JENS, Thomas, 22927 Gross Hansdorf (DE)
(74) Vertreter: Glawe, Delfs, Moll
(86) Internationale Anmeldenummer: PCT/EP2010/005908
(87) Internationale Veröffentlichungsnummer: WO 2011/038885

(56) Entgegenhaltungen:
- EP-A1- 0 456 184
- EP-A1- 1 588 621
- CH-A5- 682 440
- DE-A1- 2 910 476
- DE-C1- 19 953 695

## Beschreibung

Die Erfindung betrifft eine Vorrichtung nach dem Oberbegriff des Patentanspruchs 1. Vorrichtungen dieser Art kommen insbesondere bei der Wurstherstellung zum Einsatz, um das Wurstbrät in den Wurstdarm zu füllen.

Bekannte Vorrichtungen dieser Art (vgl. z.B. Dokumente DE 199 53 695 und DE 29 10 476) weisen ein Füllrohr auf, über dessen eines Ende der einseitig verschlossene Verpackungsschlauch gestülpt und gerafft wird. Vom anderen Ende des Füllrohrs wird Füllgut durch das Füllrohr gestoßen, so dass dieses aus der Füllrohrmündung austritt und durch den Druck des nachdrängenden Guts nach und nach den Verpackungsschlauch abzieht. Jenseits der Füllrohrmündung ist normalerweise eine Verschließvorrichtung angeordnet, die den gefüllten Verpackungsschlauch abschnittsweise mit Einschnürelementen einschnürt und anschließend mit Verschließwerkzeugen verschließt, z. B. mittels metallischer Verschlussklammern. Auf diese Weise können beidseitig verschlossene Verpackungsabschnitte, insbesondere Würste, hergestellt werden.

Damit das Abziehen des Verpackungsschlauchs gleichmäßig erfolgt und sich darin ein gewisser Fülldruck einstellt, ist in Höhe der Füllrohrmündung eine Darmbremse angeordnet. Diese liegt von außen so auf dem Verpackungsschlauch auf und drückt ihn auf das Füllrohr, dass eine Reibkraft entsteht, die für das Abziehen überwunden werden muss. Für die Darmbremse eignet sich besonders ein ringsum um das Rohr auf diesem aufliegender Gummiring.

Die Darmbremse wird von einer Darmbremshalterung in Position gehalten. Um das Füllrohr nach dem Abschluss eines Füllvorgangs mit neuem Verpackungsmaterial beschicken zu können, muss die Darmbremse entlang des Füllrohrs in Höhe der Füllrohrmündung in eine Freigabeposition beweglich sein. Hierzu ist es bekannt, die Darmbremse parallel zur Füllrohrachse verschiebbar anzuordnen. Das Rohr ist außerdem um eine von der Füllrohrmündung entfernte Rohrschwenkachse schwenkbar gelagert, so dass es nach dem Wegziehen der Darmbremse zum Benutzer hin geschwenkt werden kann, damit dieser auf einfache Weise neues Verpackungsmaterial auf das Rohr aufziehen kann.

Im Stand der Technik wird die Darmbremse vom Füllrohr weggezogen, wenn dieses sich in Arbeitsstellung befindet. In dieser Stellung befindet sich allerdings unmittelbar vor der Füllrohrmündung eine Verschließvorrichtung. Um Platz für die Bewegung der Darmbremse zu schaffen, muss die Verschließvorrichtung also ihrerseits ganz oder teilweise vom Füllrohr wegbewegt werden. Bekannt sind hierfür Lösungen, bei der die gesamte Verschließvorrichtung auf Schienen weggezogen wird oder insgesamt um eine Achse weggeschwenkt werden kann. Etwas eleganter, aber immer noch sehr aufwendig ist das Wegbewegen einzelner Teile der Verschließvorrichtung, etwa nur der Einschnürelemente.

Es kommt hinzu, dass die Darmbremse relativ zum Füllrohr oftmals drei stabile Positionen einnehmen soll. Neben der Arbeitsposition, also während des gewöhnlichen Abziehens des Verpackungsschlauchs beim Füllen, und der Freigabeposition soll die Darmbremse auch in einer sogenannten Durchziehposition stabil gehalten werden können. Diese Durchziehposition ist eine dritte Position entlang der Füllrohrachse, in der die auf das Verpackungsmaterial ausgeübte Reibkraft vermindert ist, so dass das Material leichter durch den Ringspalt zwischen Darmbremse und Füllrohr hindurch gezogen werden kann. Eine zeitweilige Verminderung der Reibkraft ist bei vielen Anwendungen gewünscht, etwa um die Gefahr eines Platzen des Verpackungsmaterials zu Beginn des Füllvorgangs für einen Verpackungsabschnitt zu verringern. Die Reibkraft ist in der Durchziehposition normalerweise dadurch herabgesetzt, dass der Außenumfang des Füllrohrs in dieser Position geringfügig kleiner ist als in der Arbeitsposition. Dieser Effekt kann auch durch die pneumatische Darmbremse erzielt werden. Hierbei wird der Bremsring durch pneumatische Betätigung gespannt oder entspannt. Die Ermöglichung dreier axialer Positionen der Darmbremse relativ zum Rohr ist jedoch besonders dann konstruktiv aufwendig, wenn ein Antrieb für den Wechsel zwischen diesen Positionen vorgesehen sein soll. Bevorzugt sind hierfür pneumatische Antriebe, doch gerade damit ist es schwierig, drei stabile Positionen zu erreichen.

Der Erfindung liegt die Aufgabe zugrunde, das Platzproblem sowie das Problem der drei stabilen Positionen der Darmbremse zu lösen und zugleich eine einfache Handhabung durch die Bedienperson zu ermöglichen. Sie löst diese Aufgabe durch die Merkmale des kennzeichnenden Teils des Patentanspruchs 1. Die Unteransprüche enthalten weitere Verbesserungen der Erfindung.

Hierbei ist Arbeitsposition des Füllrohrs die Position, die es einnimmt, wenn Füllgut durch das Füllrohr gestoßen wird, so dass auf dem Füllrohr aufgezogenes Verpackungsmaterial abgezogen wird. Die Füllrohrachse ist diejenige Achse des Füllrohrs, wenn es sich in seiner Arbeitsposition befindet.

Die Rohrschwenkachse steht normalerweise vertikal, so dass das Füllrohr seitlich von der Vorrichtung weggeschwenkt werden kann. Ferner schneidet die Rohrschwenkachse normalerweise die Füllrohrachse, und zwar im rechten Winkel. Die Aufziehposition kann jede Position des aus der Arbeitsposition weggeschwenkten Füllrohrs sein. Normalerweise ist sie soweit von der Arbeitsposition entfernt, dass bequem neues Verpackungsmaterial über die Füllrohrmündung gezogen werden kann. In der Praxis erfordert dies meist eine Schwenkbewegung von wenigstens 20°.

Als Darmbremse eignet sich jedweder Gegenstand, der geeignet ist, aufliegend auf dem auf dem Füllrohr befindlichen Verpackungsmaterial eine Reibkraft auf dieses auszuüben. Dass die Darmbremse in Höhe der Füllrohrmündung angeordnet ist, heißt, dass sie sich in der Nähe der Mündung befindet. Normalerweise sitzt sie auf dem Füllrohr wenige Millimeter von der Mündung entfernt.

Unter einer Darmbremshalterung ist jedwede Einrichtung zu verstehen, die die Darmbremse in Position hält und eine Bewegung der Darmbremse entlang des Füllrohrs in Höhe der Füllrohrmündung ermöglicht. Die Darmbremshalterung kann auch ein Gehäuse für die Darmbremse umfassen.

Die erfindungsgemäße Darmbremshalterung ermöglicht nicht nur eine Linearbewegung der Darmbremse entlang der Füllrohrachse, sondern eine Abziehbewegung der Darmbremse in der Weise, dass die Darmbremse von der Füllrohrachse weggeschwenkt und von der Rohrschwenkachse weggezogen wird. Dabei können das Wegschwenken und das Wegziehen gleichzeitig erfolgen. Das ist jedoch nicht zwingend. Diese Bewegungsabschnitte können auch nacheinander ablaufen oder ganz oder teilweise überlagert sein. Insbesondere kann die Abziehbewegung zunächst in einer reinen Wegschwenkbewegung bestehen und die Wegziehbewegung erst in einer späteren Bewegungsphase einsetzen. Entscheidend ist, dass die Darmbremse die Füllrohrachse verlässt. Dass die Darmbremshalterung die Bewegung der Darmbremse ermöglicht, bedeutet, dass die Halterung ihre Haltefunktion in jedem Abschnitt der Bewegung übernimmt. Wird etwa die Darmbremse von Hand bewegt und dann losgelassen, so hält sie die Darmbremshalterung in Position.

Ferner weist die Darmbremshalterung eine Führungseinrichtung für die Darmbremse auf, die so ausgeführt ist, dass zumindest in einem Bewegungsabschnitt der Abziehbewegung der Darmbremse ein Schwenken des Rohrs zugleich eine Bewegung der Darmbremse bewirkt. Hierdurch kann die Bedienperson durch Verschwenken des Füllrohrs zugleich die Abziehbewegung der Darmbremse in Gang setzen, so dass sich gesonderte Arbeitsschritte oder Handhaben für diese Bewegung erübrigen.

Bei der erfindungsgemäßen Vorrichtung können Füllrohr und Darmbremse zur selben Maschine gehören, also insbesondere Komponenten einer Füll- oder Verschließmaschine sein. Es ist aber ebenso möglich, dass sie zu unterschiedlichen Maschinen gehören, also etwa die Darmbremse nebst Darmbremsaufhängung zu einer Verschließmaschine und das Füllrohr zu einer Füllmaschine.

Vorteilhafterweise weist die Darmbremshaltung eine Führungseinrichtung für die Darmbremse auf, die die Bewegung der Darmbremse in einer Ebene hält. Dies verbessert den Bedienkomfort und die Betriebssicherheit, da die Bewegung er Darmbremse für die Bedienperson besser vorhersehbar ist.

Entsprechend werden Betriebskomfort und Betriebssicherheit in vorteilhafterweise weiter erhöht, wenn die Darmbremshalterung eine Führungseinrichtung für die Darmbremse aufweist, die die Abziehbewegung zumindest in einem Bewegungsabschnitt nur entlang einer Bewegungsbahn zulässt. Bewegungsbahn bedeutet in diesem Sinne, dass die Bewegung nur einen Freiheitsgrad aufweist. Sie ist dann besonders gut kontrollierbar.

Vorteilhafterweise weist im Falle einer der vorstehend genannten Weiterbildungen die Führungseinrichtung eine Steuerkurve auf. Dies ermöglicht auf einfache und zuverlässige Weise eine kontrollierte Abziehbewegung. Es ist hierbei ferner vorteilhaft, wenn die Steuerkurve einen kreisbogenförmigen Abschnitt aufweist. Die Bedienperson kann dann die Bewegung der Darmbremse leicht vorhersehen. Ferner ist es vorteilhaft, wenn der kreisbogenförmige Abschnitt so angeordnet ist, dass der Kreismittelpunkt mit der Rohrschwenkachse zusammen fällt. In diesem Fall kann die Abziehbewegung der Darmbremse mit leichtem Kraftaufwand durch ein Verschwenken des Rohrs bewirkt werden. Alternativ zu dieser Anordnung des Kreismittelpunkts kann dieser vorteilhafterweise näher an der Füllrohrmündung liegen als die Rohrschwenkachse. In diesem Fall können auch längere Rohre zusammen mit der Darmbremse verschwenkt werden. Die erfinderungsgemäße Führungseinrichtung legt also nicht zwingend die Füllrohrlänge fest. Statt eines kreisbogenförmigen Abschnitts oder zusätzlich für eine spätere Phase der Abziehbewegung weist die Steuerkurve einen Abschnitt auf, in dem die zurückzulegende Strecke der Darmbremse für die Schwenkbewegung länger ist als die für die Abziehbewegung. Dies bewirkt eine Kraftwandlung derart, dass die aufzuwendende Kraft geringer ist als bei einer herkömmlichen, rein linearen Abziehbewegung. Damit sind die Arbeitsschritte des Abziehens der Darmbremse und des Ausschwenken des Rohrs nicht nur zu einem einzigen Schritt zusammen gefasst. Für das Abziehen der Darmbremse ist auch ein geringerer Kraftaufwand erforderlich.

Im Fall einer Führungseinrichtung mit einem kreisbogenförmigen Abschnitt ist es ferner vorteilhaft, wenn sich an den kreisbogenförmigen Abschnitt bei Durchführung der Abziehbewegung ein Abschnitt mit größeren Bewegungsradien anschließt. In diesem Fall bewirkt die Führungseinrichtung auch ein Wegziehen der Darmbremse vom Füllrohr. Dies ist besonders effektiv und damit vorteilhaft, wenn die größeren Bewegungsradien derart sind, dass die Abziehbewegung eine Bogenform mit entgegengesetzter Krümmung zum vorausgehenden kreisbogenförmigen Abschnitt durchläuft.

Ein Ausführungsbeispiel der Erfindung wird nachfolgend anhand von Zeichnungen näher erläutert. Dabei zeigen:
- Fig. 1:: eine Draufsicht auf eine erfindungsgemäße Vorrichtung mit Füllrohr und Darmbremse in Arbeitsposition;
- Fig. 2:: die Vorrichtung gemäß Fig. 1 in der gleichen Ansicht mit Füllrohr und Darmbremse in Aufziehposition sowie einer alternativen Ausführungsvariante für das Füllrohr.

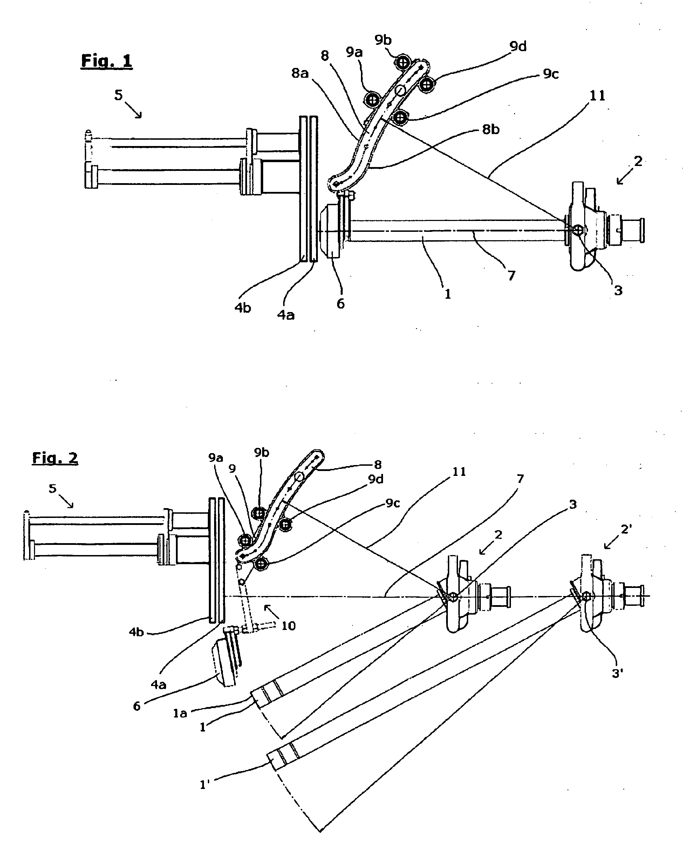

Ein Füllrohr 1 ist an einer insgesamt mit 2 bezeichneten Füllrohraufhängung um eine senkrecht zur Zeichenebene stehende Rohrschwenkachse 3 schwenkbar gelagert. In der in Fig. 1 gezeigten Position befindet sich das Füllrohrs 1 in seiner Arbeitsposition. In dieser Position befinden sich stirnseitig unmittelbar vor der Füllrohrmündung 1a die zu zwei voneinander axial beabstandeten Gruppen 4a, 4b zusammengefassten Einschnürelemente einer Verschließvorrichtung. Die von der Füllrohrmündung 1a abseitige Gruppe 4a von Einschnürelementen ist mit Hilfe eines insgesamt mit 5 bezeichneten Führungsgestänges axial von der Füllrohrmündung 1a weg bewegbar. Hierdurch kann nach dem Füllen eines Verpackungsabschnitts und dem anschließenden Einschüren ein füllgutfreier Verpackungsabschnitt gebildet werden, auf den sich in einfacher Weise Verschlussklammern setzen lassen. Eine Beweglichkeit der der Füllrohrmündung 1a zugewandten Gruppe 4a von Einschnürelementen ist dafür nicht erforderlich. Bei vorbekannten Vorrichtungen ist eine axiale Beweglichkeit auch dieser Gruppe 4a gleichwohl vorgesehen, da sonst die in einem Darmbremsgehäuse 6 gehaltene Darmbremse nicht vom Füllrohr 1 abgezogen werden kann. Dieses Abziehen erfolgt im Stand der Technik linear entlang der Füllrohrachse 7, während sich das Füllrohr noch in der in Fig. 1 gezeigten Arbeitsposition befindet. Erst danach wird das Füllrohr 1 um die Rohrschwenkachse 3 seitlich weggeschwenkt, so dass neues Verpackungsmaterial aufgezogen werden kann.

Im Gegensatz dazu vollführt das Darmbremsgehäuse 6 samt der Darmbremse nach dem erfindungsgemäßem Ausführungsbeispiel keine Linearbewegung, sondern wird in einem ersten Bewegungsabschnitt zusammen mit dem Füllrohr 6 von der Füllrohrachse 7 weggeschwenkt und in einem darauf folgenden Bewegungsabschnitt zusätzlich von der Rohrschwenkachse 3 weggezogen. Erreicht wird dies über eine Steuerkurve, die im Ausführungsbeispiel durch eine Schiene 8 und einen an deren Flanken 8a, 8b mittels Rädern 9a, 9b, 9c und 9d entlang laufenden Steuerwagen 9 gebildet ist. An dem dem Füllrohr 1 zugewandten Ende des Steuerwagens 9 befindet sich eine insgesamt mit 10 bezeichnete Gehäuseaufhängung für das Darmbremsgehäuse 6. Die Anordnung aus Steuerwagen 9, Gehäuseaufhängung 10 und Darmbremsgehäuse ist starr. Die Achsen für die Räder 9a, 9b, 9c und 9d sind allerdings in der Zeichenebene schwenkbar am Steuerwagen 9 aufgehängt.

Die Flanken 8a, 8b der Schiene 8 sind so geformt, dass der Steuerwagen 9 bei der Abziehbewegung der Darmbremse zunächst einen kreisbogenförmigen Abschnitt durchfährt. Der Kreismittelpunkt dieses Bewegungsabschnitts fällt mit der Rohrschwenkachse 3 zusammen, der Bewegungsradius ist mit 11 bezeichnet. Das hat zur Folge, dass beim Verschwenken des Füllrohrs 1 durch die Bedienperson zwangsläufig auch die Darmbremse mitbewegt wird, mithin also die Abziehbewegung eingeleitet wird. Es ist weder ein gesonderter Arbeitsschritt noch eine Handhabe für die Abziehbewegung erforderlich. Hierfür muss der Kreismittelpunkt für die Bewegung des Steuerwagens 9 nicht unbedingt mit der Rohrschwenkachse 3 zusammenfallen. Ebenso kann er von der Füllrohrmündung 1a aus gesehen auch vor der Rohrschwenkachse 3, vorzugsweise auf der Füllrohrachse 7, liegen. Das Füllrohr sollte dann allerdings lang genug sein, dass es während dieses kreisbogenförmigen Bewegungsabschnitts der Abziehbewegung die Darmbremse mitnehmen kann. Dies ist mit dem längeren Füllrohr 1' als alternative Ausführungsvariante in Fig. 2 dargestellt, wo die Füllrohraufhängung mit 2' und die Rohrschwenkachse mit 3' bezeichnet sind.

Der weitere Verlauf der Flanken 8a, 8b ist dann dergestalt, dass sich der Bewegungsradius 11 des Steuerwagens 9 vergrößert, im Ausführungsbeispiel so stark, dass der Krümmungsverlauf der Flanken 8a, 8b die entgegengesetzte Richtung einschlägt. Auf diese Weise wird die Darmbremse beim weiteren Verschwenken des Füllrohrs 1 entweder automatisch von diesem abgezogen oder kann mit leichtem Kraftaufwand abgezogen, so dass die Füllrohrmündung 1a frei kommt. Diese Änderung des Verlaufs der Flanken 8a, 8b ist so angeordnet, dass die Bewegung des Darmbremsgehäuses 6 vom Füllrohr 1 weg an einer Stelle erfolgt, an der das Darmbremsgehäuse 6 nicht mehr mit den Einschnürelementen 4a, 4b der Verschließvorrichtung zusammen stoßen kann, wie in Fig. 2 gezeigt.

## Patentansprüche

1. Vorrichtung zum Befüllen schlauch- oder beutelförmiger Verpackungen mit pastösem Füllgut mit einem um eine Rohrschwenkachse (3) zwischen einer Arbeitsposition und einer Aufziehposition schwenkbaren Füllrohr (1) mit einer Füllrohrachse (7) und einer Füllrohrmündung (1a), einer in Höhe der Füllrohrmündung angeordneten Darmbremse, einer Darmbremshalterung, die eine Bewegung der Darmbremse entlang des Füllrohrs (1) in Höhe der Füllrohrmündung (1a) und eine Abziehbewegung der Darmbremse in der weise ermöglicht, dass die Darmbremse von der Füllrohrachse (7) weggeschwenkt und von der Rohrschwenkachse (3) weggezogen wird, **dadurch gekennzeichnet, dass** die Darmbremshalterung eine Führungseinrichtung (8, 9) für die Darmbremse aufweist, die so ausgeführt ist, dass zumindest in einem Bewegungsabschnitt der Abziehbewegung der Darmbremse ein Schwenken des Rohrs (1) zugleich eine Bewegung der Darmbremse bewirkt.

2. Vorrichtung nach Patentanspruch 1, **dadurch gekennzeichnet, dass** die Führungseinrichtung (8, 9) die Abziehbewegung der Darmbremse in einer Ebene hält.

3. Vorrichtung nach Patentanspruch 1 oder 2, **dadurch gekennzeichnet, dass** die Führungseinrichtung (8, 9) die Abziehbewegung zumindest in einem Bewegungsabschnitt nur entlang einer Bewegungsbahn zulässt.

4. Vorrichtung nach einem der vorstehenden Patentansprüche, **dadurch gekennzeichnet, dass** die Führungseinrichtung (8, 9) eine Steuerkurve (8) aufweist.

5. Vorrichtung nach Patentanspruch 4, **dadurch gekennzeichnet, dass** die Steuerkurve (8) einen kreisbogenförmigen Abschnitt aufweist.

6. Vorrichtung nach Patentanspruch 5, **dadurch gekennzeichnet, dass** der kreisbogenförmige Abschnitt so angeordnet ist, dass der Kreismittelpunkt mit der Rohrschwenkachse (3) zusammen fällt.

7. Vorrichtung nach Patentanspruch 5, **dadurch gekennzeichnet, dass** der Kreismittelpunkt des kreisbogenförmigen Abschnitts näher an der Füllrohrmündung (1a) liegt als die Rohrschwenkachse (3).

8. Vorrichtung nach einem der Patentansprüche 5 bis 7, **dadurch gekennzeichnet, dass** sich an den kreisbogenförmigen Abschnitt bei Durchführung der Abziehbewegung ein Abschnitt mit größeren Bewegungsradien anschließt.

9. Vorrichtung nach Patentanspruch 8, **dadurch gekennzeichnet, dass** die größeren Bewegungsradien derart sind, dass die Abziehbewegung eine Bogenform mit entgegengesetzter Krümmung zum vorausgehenden kreisbogenförmigen Abschnitt durchläuft.

## Claims

1. Apparatus for filling tubular or bag-shaped packaging with a paste-like product, said apparatus having a fill pipe (1), which is pivotable about a pipe pivot axis (3) between an operating position and a pull-on position and has a fill pipe axis (7) and a fill pipe mouth (1a), a casing brake located at the level of the fill pipe mouth, a casing brake holder that enables movement of the casing brake along the fill pipe (1) at the level of the fill pipe mouth (1a) and a pull-off movement of the casing brake in such a manner that the casing brake is pivoted away from the fill pipe axis (7) and is pulled away from the pipe pivot axis (3), **characterized in that** the casing brake holder includes a guide device (8, 9) for the casing brake, said guide device being designed such that, at least in one movement portion of the pull-off movement of the casing brake, pivoting the pipe (1) at the same time brings about movement of the casing brake.

2. Apparatus according to Claim 1, **characterized in that** the guide device (8, 9) holds the pull-off movement of the casing brake in one plane.

3. Apparatus according to Claim 1 or 2, **characterized in that** the guide device (8, 9) allows the pull-off movement only along one path of movement at least in one movement portion.

4. Apparatus according to one of the preceding claims, **characterized in** the guide device (8, 9) includes a control cam (8).

5. Apparatus according to Claim 4, **characterized in that** the control cam (8) includes an arcuate portion.

6. Apparatus according to Claim 5, **characterized in that** the arcuate portion is located such that the centre of the circle coincides with the pipe pivot axis (3).

7. Apparatus according to Claim 5, **characterized in that** the centre of the circle of the arcuate portion is located closer to the fill pipe mouth (1a) than the pipe pivot axis (3).

8. Apparatus according to one of Claims 5 to 7, **characterized in that** a portion with larger movement radii connects to the arcuate portion when the pull-off movement is carried out.

9. Apparatus according to Claim 8, **characterized in that** the larger movement radii are in such a manner that the pull-off movement runs through an arc shape with opposing curvature to the preceding arcuate portion.

## Revendications

1. Dispositif pour remplir des emballages en forme de tube ou de poche avec un produit de remplissage pâteux comprenant un tuyau de remplissage (1) pouvant basculer autour d'un axe de basculement du tuyau (3) entre une position de service et une position de remontage avec un axe de tuyau de remplissage (7) et une bouche de tuyau de remplissage (1a), un frein de boyau agencé à la hauteur de la bouche du tuyau de remplissage, un support de frein de boyau qui permet un mouvement du frein de boyau le long du tuyau de remplissage (1) à la hauteur de la bouche du tuyau de remplissage (1a) et un mouvement de levée du frein de boyau de telle sorte que le frein de boyau est basculé à distance de l'axe du tuyau de remplissage (7) et éloigné de l'axe de basculement du tuyau (3), **caractérisé en ce que** le support du frein de boyau présente un dispositif de guidage (8, 9) pour le frein de boyau qui est réalisé de telle sorte qu'au moins dans une section du mouvement de levée du frein de boyau, un basculement du tuyau (1) provoque en même temps un mouvement du frein de boyau.

2. Dispositif selon la revendication 1, **caractérisé en ce que** le dispositif de guidage (8, 9) maintient le mouvement de levée du frein de boyau dans un plan.

3. Dispositif selon la revendication 1 ou 2, **caractérisé en ce que** le dispositif de guidage (8, 9) autorise uniquement le mouvement de levée le long d'une trajectoire de mouvement au moins dans une section du mouvement.

4. Dispositif selon l'une des revendications précédentes, **caractérisé en ce que** le dispositif de guidage (8, 9) présente une courbe de commande (8).

5. Dispositif selon la revendication 4, **caractérisé en ce que** la courbe de commande (8) présente une section en forme d'arc de cercle.

6. Dispositif selon la revendication 5, **caractérisé en ce que** la section en forme d'arc de cercle est agencée de telle sorte que le point central du cercle coïncide avec l'axe de basculement du tuyau (3).

7. Dispositif selon la revendication 5, **caractérisé en ce que** le point central du cercle de la section en forme d'arc de cercle est plus proche de la bouche du tuyau de remplissage (1a) que l'axe de basculement du tuyau (3).

8. Dispositif selon l'une des revendications 5 à 7, **caractérisé en ce qu'**une section ayant des rayons de mouvement plus importants fait suite à la section en forme d'arc de cercle dans l'exécution du mouvement de levée.

9. Dispositif selon la revendication 8, **caractérisé en ce que** les rayons de mouvement plus importants sont de telle sorte que le mouvement de levée parcourt une forme d'arc ayant une courbure opposée par rapport à la section en forme d'arc de cercle précédente.
